# EUROPEAN PATENT APPLICATION

(11) **EP 4 374 931 A1**
(43) Date of publication of application: **29.05.2024**
(21) Application number: 23173596.0
(22) Date of filing: 16.05.2023
(51) Int. Cl.: A62C 4/00, H01M 50/383, A62C 3/16

(54) **FLAME ARRESTOR DESIGN FOR BATTERY MODULE**

(30) Priority: 28.11.2022 US 202217994867
(71) Applicant: Google LLC, Mountain View, CA 94043 (US)
(72) Inventor: Peabody, Christina, Mountain View, 94043 (US); Boovaragavan, Vijayasekaran, Mountain View, 94043 (US); Sizikov, Gregory, Mountain View, 94043 (US); Iyengar, Madhusudan K., Mountain View, 94043 (US)
(74) Representative: Betten & Resch

(57) **Abstract**

The disclosure generally relates to a flame arrestor device configured to reduce the hazards of a thermal runaway, by containing sparks and molten particles and cooling gasses emitted from the cells. The device may be used in any apparatus that requires a lithium-ion cell battery, such as a data centers, smartphone, tablet, earbuds, etc. The device may include a mesh screen and a baffle. The mesh screen may include multiple layers of mesh offset from each other. The baffle may be formed in a chevron pattern and affixed to the inside of the mesh screen.

## Description

### BACKGROUND

Lithium-ion batteries are commonly used as a power source in data centers, consumer hardware, and other products. Lithium batteries are typically safe, so long as there are no defects and the cells are not damaged. When lithium-ion cells fail to operate safely or are damaged, the lithium-ion battery presents a fire or explosion hazard. Damage from improper use, storage, or charging may increase these potential hazards. Damage to lithium-ion batteries can occur immediately or over a period of time, from physical impact, exposure to certain temperatures, improper charging or other electrical abuse. During typical use, lithium-ion batteries release a small amount of heat that is able to dissipate from the cell. However if the cell is damaged and the temperature of the cell rises at a rate greater than 20 degrees centigrade per minute, the cell can reach a thermal runaway. Thermal runaway has been associated with hazards such as smoke, flames, fire incidents.

### BRIEF SUMMARY

The technology generally relates to a flame arrestor design that can be included within a device to mitigate fire hazard risks associated with lithium-ion. The flame arrestor design may be used in conjunction with lithium-ion batteries, or cells. For example, the flame arrestor may be included within a device and positioned adjacent to a battery cell. The flame arrestor may include a mesh screen and a baffle and may comprise fire resistant material. The mesh screen may contain multiple layers of mesh offset from one another to occlude straight through-holes and prevent sparks or molten particles from passing through. The baffle may be affixed to the inside of the mesh screen and may be configured to be an added layer of protection to capture molten particles ejected from the cells and create a channel structure for the gasses.

One aspect of the technology provides for a flame arrestor configured for insertion in a battery chassis, the flame arrestor comprising, a baffle extending in a first direction and a second direction relative to the battery chassis such that at least a cross-sectional portion of the baffle extends a long a first plane and a mesh screen extending below the baffle. The baffle may have a first length and the mesh screen has a second length, the first length being shorter than the second length.

The mesh screen may extend along a second plane parallel to the first plane. The mesh screen may further comprise at least two layers of mesh. Each layer of mesh may include a plurality of holes and the holes of the first layer of mesh are vertically and laterally offset from the holes of a second adjacent layer of mesh. The distance between the first and second layer of mesh may be between 1 mm and 10 mm.

The baffle may be accordion shaped. Further, the baffle may be affixed to the mesh screen. The first end of the baffle may be affixed to a connector portion that is further affixed to a first end of the mesh screen. The baffle may be positioned between the layers of mesh of the mesh screen. The first end of the baffle may be affixed to the flame arrestor and the second end of the baffle may not be affixed to the flame arrestor.

Another aspect of the technology provides for a device that may comprise a chassis having a first wall and a second wall, and a flame arrestor positioned inside the chassis between the first and second walls, wherein the flame arrestor may comprise a mesh screen and a baffle. The device may further comprise a cross-sectional portion of the baffle that extends along a first plane orthogonal to a first wall and second wall, and a cross-sectional portion of the mesh screen may extend along a plane parallel to the first plane.

The mesh screen may further comprise at least two levels of layers of mesh. The layers of mesh may include a plurality of holes. The plurality of holes in the first layer of mesh may be vertically and laterally offset from the plurality of holes in a second plane parallel to the first plane. The distance between the first and second layers of mesh may be between 1 mm and 10 mm.

The baffle may be accordion shaped. The first end of the baffle is affixed to a first end of the mesh screen via a connector portion that may extend orthogonally relative to the baffle and the mesh screen. The baffle may be positioned above the mesh screen. In some embodiments, the mesh screen may be positioned between the layers of mesh.

### BRIEF DESCRIPTION OF THE DRAWINGS

Figure 1 is a cross-sectional view of an example flame arrestor within a battery chassis according to aspects of the disclosure.
Figure 2 is a cross-sectional view of the example flame arrestor of Fig. 1 in use to prohibit escape of sparks or particulates according to aspects of the disclosure.
Figure 3 is a cross-sectional view of an example flame arrestor within a battery chassis according to aspects of the disclosure, specifically highlighting a pathway of gas through the flame arrestor.
Figure 4 is a cross-sectional view of another example flame arrestor within a battery chassis according to aspects of the disclosure.
Figure 5 is a perspective view of another example flame arrestor within battery chassis according to aspects of the disclosure.

### DETAILED DESCRIPTION

The technology generally relates to a flame arrestor that, when adjacent to a cell of a battery, may mitigate fire hazard risks associated with batteries. The flame arrestor includes a multi-layer barrier to prevent sparks and molten particles ejected from cells of the battery during thermal runaway from exiting the inner cell compartment of the battery pack. For example, the flame arrestor may include a mesh screen and a baffle. The mesh screen may include two or more layers that are offset from one another such that there are no through-holes from a first layer of the mesh to the last layer of the mesh. The baffle may be affixed to a first side of the mesh screen and may be configured to capture molten particles ejected from the cells. Additionally or alternatively, the baffle may create a channel structure for the gasses produced by the cells to escape.

The process of charging and discharging a battery is typically accompanied by a small amount of heat. However, when the battery and/or a cell within the battery is damaged, heat released from the battery cell can damage nearby cells, releasing more heat in a chain reaction known as a thermal runaway. Thermal runaway can result in the ejection of gas, sparks, molten particles, shrapnel and/or particulates, extremely high temperatures, smoke and fire. The flame arrestor prevents the sparks, molten particles, shrapnel, particulates, etc. from exiting the cell.

In some examples, the flame arrestor may create a safe channel for the gas ejected from the cell during the thermal runaway event to exit the inner cell compartment. The channel may extend the distance the gas has to travel from the cell prior to exiting the inner cell compartment of the battery pack. By having the gas travel a longer distance to reach nearby cells, the time for the gas to cool before exiting increases, thus decreasing the likelihood of a chain reaction due to the thermal runaway event. Additionally, allowing the gas more time to cool may decrease the susceptibility of ignition of the gas once the gas exits the inner cell compartment. Moreover, the flame arrestor may enable the battery to be compliant with stringent fire safety regulations.

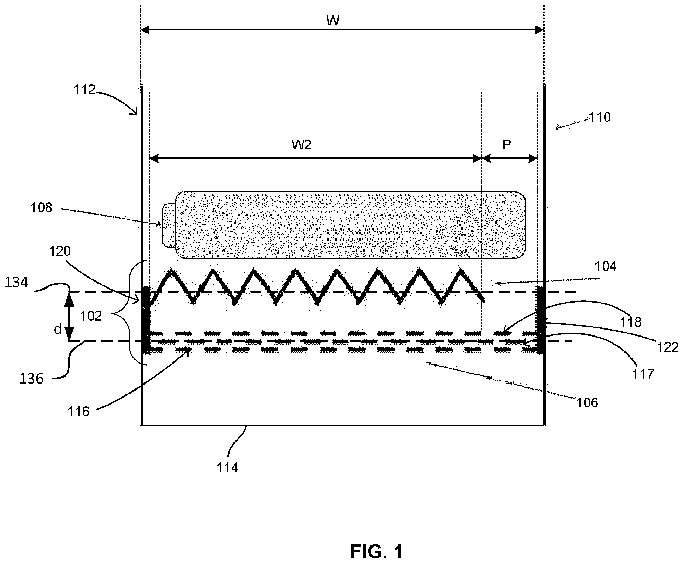

Figure 1 illustrates a cross-section of a flame arrestor within a battery chassis. The battery chassis may have a first sidewall 110 and a second sidewall 112 separated by a width W. As shown, the chassis is rectangular with parallel, linear sidewalls 110 and 112 separated by a constant width or varying W. However, the chassis may take other forms such as circular, wherein the sidewalls may be curved, or polygonal, wherein the width may be varied along the length of the chassis and the sidewalls may converge. First sidewall 110 and second sidewall 112 being parallel and linear are merely one example and are not intended to be limiting. In some examples, the first and second sidewalls 110, 112 may be joined by a bottom wall 114 or other adjoining member to form the chassis.

Within the battery chassis may be a battery cell(s) 108 and flame arrestor 102. The flame arrestor 102 may be adjacent to the battery cell(s) 108 and may include a baffle 104 and mesh screen 106. The flame arrestor 102 may be positioned adjacent to the battery cell 108 to prevent sparks and gasses from escaping the chassis during a thermal runaway event. As shown, the flame arrestor 102 is shown as being located below the battery cell 108, however, the flame arrestor 102 may be located above, below, next to, etc. the battery cell 108 based on the design of the battery chassis. The flame arrestor 102 being below battery cell 108 is merely one example and is not intended to be limiting.

The flame arrestor 102 may be sized and shaped corresponding to a size and shape of the battery chassis. For example, the flame arrestor 102 may have a length and width that corresponds to the length and width of the chassis. The chassis may be substantially rectangular. For example, each mesh layer may be a substantially flat rectangular sheet of mesh. According to other examples, the flame arrestor 102 may be curved in one or more dimensions. For example, the flame arrestor may extend in a cylindrical direction that at least partially surrounds a circumference of the battery cell. According to further examples, multiple flame arrestors of a same or different shape may be positioned in relation to the battery cell, such as a first flame arrestor being positioned below the cell and a second flame arrestor being positioned at a side portion of the cell.

As shown in Fig. 1, a cross-sectional portion of the flame arrestor may extend across the chassis between a first wall of the chassis and a second wall of the chassis. The baffle 104 may extend a first length along a space between the first wall and the second wall. A cross-section of the baffle may extend along a first plane 134 that is orthogonal to both the first wall and the second wall. The baffle 104 may be, for example, accordion shaped, such that a top surface of the baffle 104 includes a plurality of peaks and valleys. According to other examples, the baffle may have different shapes, such as waves, bumps, sawtooth, flat, etc.

The mesh screen 106 may also extend between the first wall of the chassis and the second wall. As shown in Fig. 1, the mesh screen 106 may be positioned beneath the baffle 104, and may have a length that is greater than the baffle 104. For example, while the baffle 104 may extend along a portion of the length between the first sidewall 110 and the second sidewall 112, the mesh screen 106 may extend along a greater portion or the entire length. The mesh screen 106 may extend along a second plane 136, which may be parallel to the first plane 134 along which the baffle 104 extends. The baffle 104 and mesh screen 106 may be separated by a distance d. According to some examples, the distance d may be between approximately 0.1 cm and 5 cm. According to other examples, the distance d may be approximately 0.5 cm - 1 cm

The baffle 104 and mesh screen 106 may be separately formed, or may be a unitary piece. According to some examples, the baffle 104 and mesh screen 106 may be coupled via a connector portion 120. For example, each of the baffle 104 and mesh screen 106 may be affixed to the connector portion 120 by welding, adhesive, mechanical coupling, or any other connection mechanism. The connector portion 120 may be, for example, a piece of material that extends vertically between the baffle 104 and the mesh screen 106. The connector portion 120 may further be coupled to the second sidewall 112 of the chassis to hold the flame arrestor 102 in position within the chassis. According to some examples, a second connector portion 122 may further be included, such as at a second end of the flame arrestor 102. The second connector portion 122 may couple the flame arrestor to the first sidewall 110. While the second connector portion 122 is shown as being affixed to only the mesh screen 106, in other examples it may be further affixed to the baffle 104 also.

In some examples, the baffle 104 and mesh screen 106 may be removably fixed to the connector portion 120 and/or connector portion 122. For example, the connector portions 120, 122 may include slots or receptacles into which the baffle 104 and mesh screen 106 may be inserted and retained in place. In this regard, the baffle 104 and mesh screen 106 may be removed to more easily access and replace the battery cell, and then reinserted into the chassis.

Flame arrestor 102 may be formed from fire resistant material, including but not limited to metal, glass, or plastic. According to some examples, the flame arrestor 102 may be composed of metals such as stainless steel, copper, iron, aluminum, titanium, chrome, chromium, nickel, etc. According to some examples, the flame arrestor 102 may be composed of flame retardant plastics, such as a plastic treated with additive brominated flame retardant, melamine, silicone, epoxy, polyurethane, polycarbonate, polyethylene, polystyrene, polypropylene, PVC, etc.

The mesh screen 106 may include one or more layers of mesh. Each layer may be separated by a distance that may be several micrometers, millimeters, centimeters, etc. According to one example, the distance separately each layer of mesh may be approximately 1 mm - 10 mm. Where the mesh screen 106 includes three or more layers, the distance between each layer may be the same or different as compared to other layers.

Each layer of mesh may include a plurality of holes. The layers of mesh are offset from other layers of mesh, thereby eliminating straight-through holes. For example, a hole within a first layer of mesh is aligned with a solid portion in a second layer of mesh. In this regard, if a spark escaped through one layer, it would be arrested by the second layer. As such, the offset of layers results in there being no through-holes extending between a first layer 116 of mesh, a second layer of mesh 117, and an n-th layer 118 of mesh. The n-th layer 118 of mesh may correspond to the last layer of mesh opposite the first layer 116 of mesh.

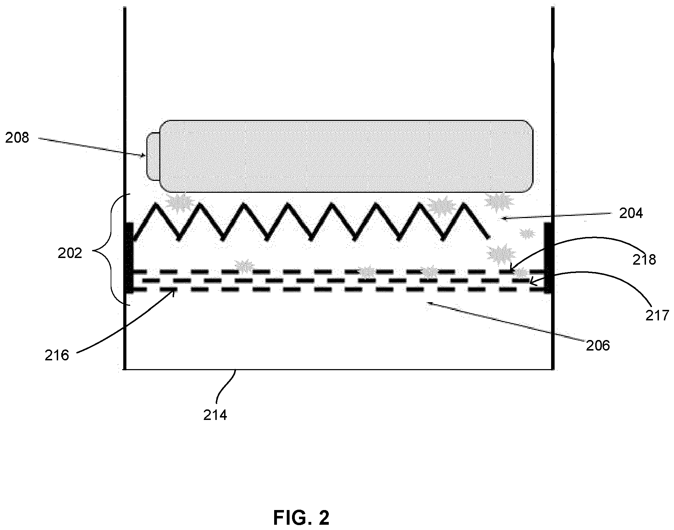

As illustrated in Fig. 2, having no through-holes extending between the first layer 216 and n-th layer 218 of mesh may prevent sparks or other debris from flowing through the mesh screen 206. Additionally or alternatively, having no through holes extending between the first layer 216 and n-th layer 218 may minimize potential damage to nearby components within the battery chassis and/or device in the event of a thermal runaway.

As shown, there are three layers of mesh such that the n-th layer 218 of mesh corresponds to the third layer of mesh. However, they may be any number of layers of mesh such that the overlap of layers prevents any through holes from extending between the first layer of mesh and the n-th layer of mesh. For example, there may be two, four, seven, eleven, etc.

The holes within each layer 216 - 218 of mesh may be microscopic in size, such that they prevent molten cell debris from escaping the cell compartment. For example, the holes may be on the order of micrometers or millimeters. By way of example only, the holes in each layer may be approximately 0.5 mm - 1 mm in size. A size of the holes may correspond to other dimensions of flame arrestor 202, such as the distance between the mesh layers. According to some examples, the holes in each layer may be substantially the same size. In some examples, the holes in each layer may vary such that, within a layer of mesh, there are holes of varying sizes. In some examples, each layer may have holes of different sizes such that the first layer 216 of mesh includes holes of a first size and a second layer of mesh 217 includes holes of a second size different than the first size.

Each layer 216-218 of mesh may be positioned within its own plane, although some layers may be positioned, fully or partially, in the same plane as other layers. While the layers of the mesh screen 206 are shown as horizontal and parallel to the bottom wall 214 of the battery chassis, the layers do not have to be horizontal as some layers may have bends or curves to fit within walls. Additionally or alternatively, some layers may overlap. Thus, the configuration of layers of the mesh screen 206, as shown, is merely an example and is not intended to be limiting.

Mesh screen 206 may be substantially equal to the width W of the battery cell 208 and/or battery chassis. In some examples, the layers of mesh may have varying lengths. Some layers of mesh may be shorter than other layers of mesh and staggered such that the mesh screen does not have any through-holes.

Mesh screen 206 may be made of a fire resistant material and/or a non-fire resistant material. For example, mesh screen 206 may be made of plastic, metal, cloth, or other materials. Mesh screen 206 may prevent sparks, molten particles, shrapnel, and/or particulates from reaching and/or surrounding battery cells or other components within the apparatus. Additionally or alternatively, capturing the sparks, molten particles, shrapnel and particulates may protect sensitive components within the apparatus housing the battery chassis.

The device may include a mesh screen 206 and a baffle 204. Baffle 204 may be coupled to the mesh screen 206. Baffle 204 may have an accordion shape. Baffle 204 may be configured to channel gasses emitted from battery cell 208. For example, during a thermal runaway event, battery cell 208 may emit gas.

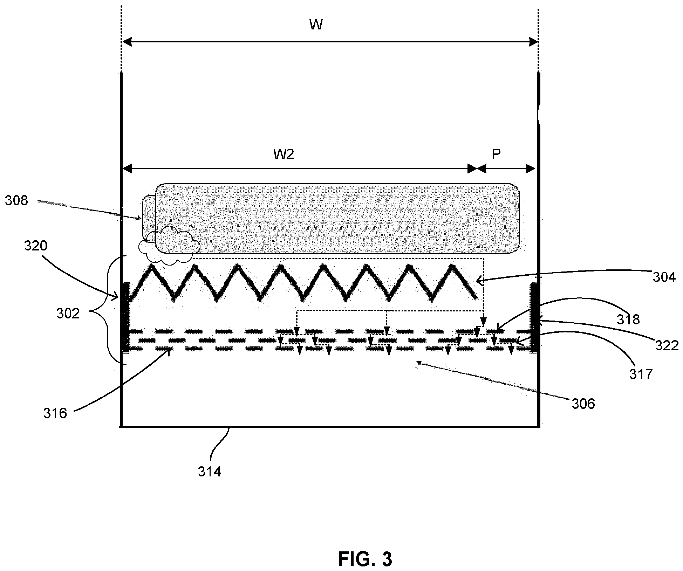

As illustrated in Fig. 3, to mitigate the likelihood of the gas emitted by the battery cell 308 igniting once the gas exits the chassis beyond end wall 314, the baffle 304 may channel the gas away from a direct path out of the battery chassis, thereby extending the distance the gas has to travel from the battery cell to the end walls of the chassis. Extending the distance the gas has to travel may increase the time it takes for the gas to exit the battery chassis. The increase in time to travel may give the gas more time to cool before exiting the battery chassis, thus decreasing the likelihood of a chain reaction due to the thermal runaway event. Additionally, allowing the gas more time to cool before exiting the battery chassis may reduce the risk of ignition once the gas exits the battery chassis.

As shown, baffle 304 has a width W2 smaller than the width of mesh screen 306 and/or the width W of the battery chassis. According to some examples, the width W2 of baffle 304 may be substantially equal to the width of mesh screen 306, including one or more layers 316-318, and/or the width W of the battery chassis. In examples in which the width W2 of baffle 304 is less than the width W of the battery chassis, gasses emitted by the battery cell 308 during a thermal runaway event may travel through the passageway P.

Baffle 304 may mimic the shape of the battery cell. In some examples, baffle 304 may be configured in a chevron pattern or any repetitive linear pattern, such as a wave, zig-zag, etc. According to some examples, baffle 304 may not have any pattern, but instead take the form of a straight line, mimicking mesh screen 306.

Baffle 304 may be affixed to flame arrestor 302. In some examples, baffle 304 may be affixed to first wall 320 and/or second wall 322 of flame arrestor 302. As shown, baffle 304 is affixed to first wall 320. However, baffle 304 may be affixed to second wall 322 instead of or in addition to first wall 320. In some examples, baffle 304 may not be affixed to either of the first or second walls 320, 322 of flame arrestor 302. According to some examples, baffle 304 may be two pieces which are individually attached to the walls of flame arrestor 302, with passageway for emitted gasses through the center of flame arrestor 302.

Baffle 304 may be formed from fire resistant material or material able to withstand heat from a thermal runaway event. Examples of such materials may include, but are not limited to, metal, glass, or plastic. According to some examples, baffle 304 may be composed of metals such as stainless steel, copper, iron, aluminum, titanium, chrome, chromium, nickel, etc. According to some examples, baffle 304 may be composed of flame retardant plastics, such as a plastic treated with additive brominated flame retardant, melamine, silicone, epoxy, polyurethane, polycarbonate, polyethylene, polystyrene, polypropylene, PVC, etc.

The flame arrestor 302 may be included in devices that have batteries. For example, consumer devices, such as smartphone, tablet, hub, earbuds, AR/VR headset, etc., data centers, etc. may use batteries as power sources. In such examples, a flame arrestor 302 may be included adjacent to the battery cells 308 to mitigate hazards in the case of thermal runaway or other dangerous situations.

The flame arrestor 302 and its components may be made out of a fire resistant material, including but not limited to metal, glass, or plastic. According to some examples, the device may be composed of metals such as stainless steel, copper, iron, aluminum, titanium, chrome, chromium, nickel, etc. According to some examples, the device may be composed of flame retardant plastics, such as a plastic treated with the additive brominated flame retardant, melamine, silicone, epoxy, polyurethane, polycarbonate, polyethylene, polystyrene, polypropylene, PVC, etc.

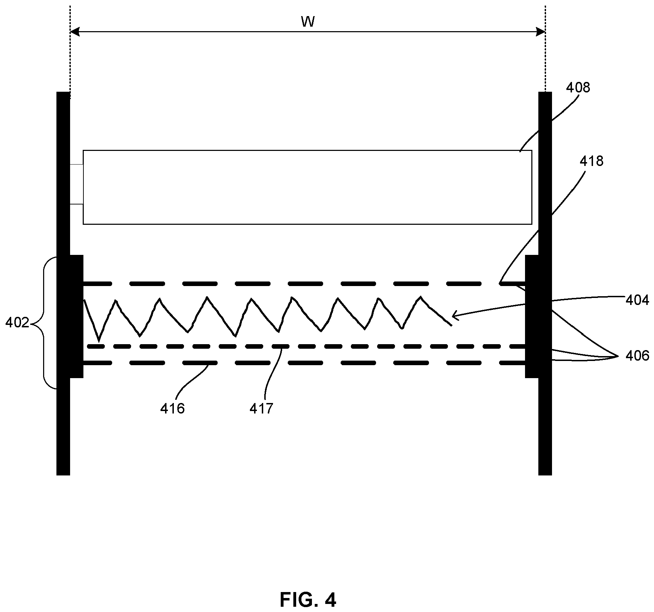

Figure 4 is a cross-sectional view of another example flame arrestor. Flame arrestor 402 is substantially similar to flame arrestor 102 except for the positioning of baffle 404. Flame arrestor 402 may include a baffle 404 substantially similar to baffle 104 and mesh screen 406 including layesr 416, 417, 418, substantially similar to mesh screen 106. Rather than being positioned between mesh screen 406 and battery cell 408, baffle 404 may be positioned between layers of mesh screen 406. As shown, baffle 404 is positioned between the second layer 417 of mesh screen 406 and the n-th layer 418 of mesh screen 406.

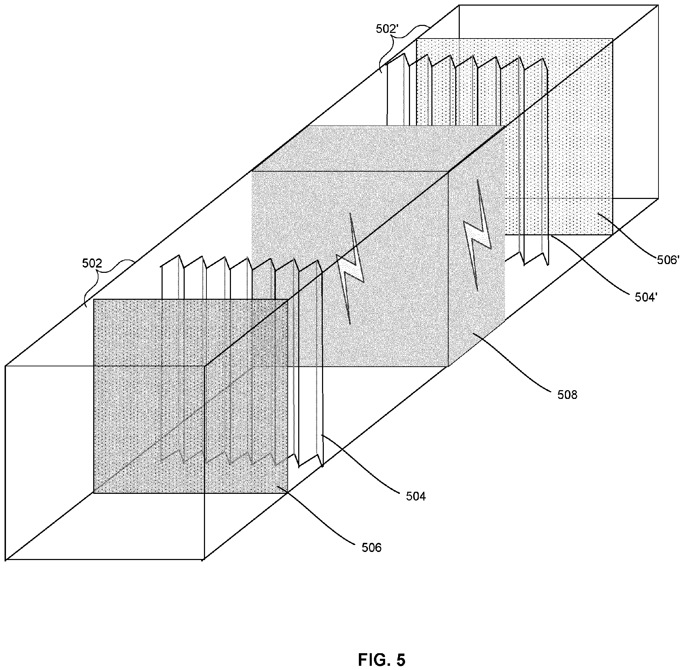

Figure 5 is a perspective view of another example flame arrestor configuration. In some examples, there may be two or more flame arrestors within the battery chassis. As shown in Fig. 5, first and second flame arrestors are respectively depicted as flame arrestor 502 and 502'. The flame arrestors 502 and 502' may be positioned between battery cell 508 and end walls of the battery chassis, such that debris from the battery cell is captured by the flame arrestor prior to exiting the battery chassis. For example, the flame arrestors 502 and 502' may be positioned above and below the battery cell 508. In another example, the flame arrestors 502 and 502' may be positioned to the left and the right of the battery cell 508. In some examples, flame arrestors may surround the battery cell 508 on all sides. Both flame arrestors 502 and 502' are substantially similar to flame arrestor 103. Flame arrestors 502 may include a baffle 504 and a mesh screen 506, which may be similar to baffle 104 and mesh screen 106 (Fig. 1).

In the example of Fig. 5, the baffle of the first flame arrestor 502 and the baffle of the second flame arrestor 502' extend only partially across a width of the battery chassis, while the mesh screens for each flame arrestor extend across the entire width of the chassis. In other examples, the baffles may extend a greater or lesser distance across the width of the chassis. Further, in the example shown, the baffle 504 of the first flame arrestor 502 leaves a gap with respect to a first sidewall of the chassis, while the baffle 504' of the second flame arrestor 502' leaves a gap with respect to a second opposing sidewall of the chassis. It should be understood that the flame arrestors may be positioned such that gaps may exist between the baffle and any sidewall. Moreover, while the baffles are shown as extending along an entire height of the chassis, in other examples the baffles may extend along only a portion of the height of the chassis. In some examples, gaps may exist between the baffle and multiple sidewalls, such as top, left, and bottom sidewalls, or any other combination of sidewalls.

According to another example, there is disclosed a flame arrestor device configured to reduce the hazards of a thermal runaway, by containing sparks and molten particles and cooling gasses emitted from the cells. The device may be used in any apparatus that requires a lithium-ion cell battery, such as a data center, smartphone, tablet, earbuds, etc. The device may include a mesh screen and a baffle. The mesh screen may include multiple layers of mesh offset from each other. The baffle may be formed in a chevron pattern and affixed to the inside of the mesh screen.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A flame arrestor configured for insertion in a battery chassis, the flame arrestor comprising:
a baffle extending in a first direction and a second direction relative to the battery chassis such that at least a cross-sectional portion of the baffle extends along a first plane; and
a mesh screen extending below the baffle.

2. The flame arrestor of claim 1, wherein the mesh screen extends along a second plane parallel to the first plane.

3. The flame arrestor of claim 1 or 2, wherein the baffle has a first length and the mesh screen has a second length, the first length being shorter than the second length.

4. The flame arrestor of any one of claims 1 to 3, wherein the mesh screen comprises at least two layers of mesh, and
wherein optionally:
each layer of mesh includes a plurality of holes, and
the holes of a first layer of mesh are vertically and laterally offset from the holes of a second adjacent layer of mesh.

5. The flame arrestor of claim 4, wherein the distance between a first layer of mesh and a second layer of mesh is between 1 mm to 10 mm.

6. The flame arrestor of any one of claims 1 to 5, wherein the baffle is accordion shaped.

7. The flame arrestor of any one of claims 1 to 6, wherein the baffle is affixed to the mesh screen, and
wherein optionally a first end of the baffle is affixed to a connector portion that is further affixed to a first end of the mesh screen.

8. The flame arrestor of claim 7, wherein the baffle is positioned between layers of mesh of the mesh screen, and
wherein optionally the first end of the baffle is affixed to the flame arrestor and the second end is not affixed to the flame arrestor.

9. A device comprising:
a chassis having a first wall and a second wall; and
flame arrestor positioned inside of the chassis between the first wall and the second wall, the flame arrestor comprising:
a mesh screen; and
a baffle.

10. The device of claim 9, wherein a cross-sectional portion of the baffle extends along a first plane orthogonal to the first wall and the second wall, and a cross-sectional portion of the mesh screen extends along a second plane parallel to the first plane.

11. The device of claim 9 or 10, wherein the mesh screen comprises at least two layers of mesh, and
wherein optionally:
each layer of mesh includes a plurality of holes, and
the plurality of holes in a first layer of the mesh are vertically and laterally offset from the plurality of holes in a second adjacent layer of the mesh.

12. The device of claim 11, wherein a distance between the layers of mesh is between 1 mm to 10 mm.

13. The device of any one of claims 9 to 12, wherein the baffle is accordion shaped.

14. The device of any one of claims 9 to 13, wherein a first end of the baffle is affixed to a first end of the mesh screen via a connector portion that extends orthogonally relative to the baffle and the mesh screen.

15. The device of any one of claims 9 to 14, wherein the baffle is positioned above the mesh screen, or
wherein the baffle is positioned between the layers of the mesh screen.
